(19) **Europäisches Patentamt**
**European Patent Office**
**Office européen des brevets**

(11) **EP 4 373 030 B1**

(12) **EUROPEAN PATENT SPECIFICATION**

(45) Date of publication and mention
of the grant of the patent:
**22.01.2025 Bulletin 2025/04**

(51) International Patent Classification (IPC):
***H04L 9/32*** (2006.01)

(21) Application number: **23203158.3**

(52) Cooperative Patent Classification (CPC):
**H04L 9/3218; H04L 9/3221; H04L 9/3247**

(22) Date of filing: **12.10.2023**

(54) **METHOD FOR CALCULATING USING AN ONE-WAY FUNCTION EFFIENCT IN A ZERO KNOWLEDGE PROOF, AND APPARATUS IMPLEMENTING THE SAME METHOD**

BERECHNUNGSVERFAHREN UNTER VERWENDUNG EINER EINWEG-FUNKTIONSEFFIZIENZ IN EINEM ZERO-KNOWLEDGE-PROOF UND VORRICHTUNG ZUR IMPLEMENTIERUNG DES VERFAHRENS

PROCÉDÉ DE CALCUL UTILISANT UNE EFFICACITÉ DE FONCTION UNIDIRECTIONNELLE DANS UNE PREUVE À CONNAISSANCE NULLE, ET APPAREIL METTANT EN UVRE LE MÊME PROCÉDÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **18.11.2022 KR 20220155427**

(43) Date of publication of application:
**22.05.2024 Bulletin 2024/21**

(73) Proprietors:
• **Samsung SDS Co., Ltd.**
**Seoul (KR)**
• **Korea Advanced Institute of Science and Technology**
**Daejeon (KR)**

(72) Inventors:
• **Kim, Seongkwang**
**05510 SEOUL (KR)**
• **Moon, Dukjae**
**05510 SEOUL (KR)**
• **Kwon, Jihoon**
**05510 SEOUL (KR)**
• **Lee, Sangyub**
**05510 SEOUL (KR)**
• **Lee, Jooyoung**
**34141 DAEJEON (KR)**

• **Son, Mincheol**
**34141 DAEJEON (KR)**
• **Lee, Byeonghak**
**34141 DAEJEON (KR)**
• **Ha, Jincheol**
**34141 DAEJEON (KR)**

(74) Representative: **Glawe, Delfs, Moll Partnerschaft mbB von Patent- und Rechtsanwälten**
**Postfach 13 03 91**
**20103 Hamburg (DE)**

(56) References cited:
• **SEONGKWANG KIM ET AL: "AIM: Symmetric Primitive for Shorter Signatures with Stronger Security", vol. 20221026:033949, 26 October 2022 (2022-10-26), pages 1 - 22, XP061073829, Retrieved from the Internet <URL:https://eprint. iacr.org/archive/2022/1387/1666755589.pdf> [retrieved on 20221026]**
• **MELISSA CHASE ET AL: "Post-Quantum Zero-Knowledge and Signatures from Symmetric-Key Primitives", IACR, INTERNATIONAL ASSOCIATION FOR CRYPTOLOGIC RESEARCH, vol. 20170330:123540, 27 March 2017 (2017-03-27), pages 1 - 25, XP061023014, DOI: 10.1145/3133956.3133997**

**Description**

BACKGROUND OF THE INVENTION

1. Field of the invention

The disclosure relates to a calculation method using an efficient one-way function in zero-knowledge proof, and an apparatus for implementing the same, and more particularly, to a method for performing a calculation using an efficient one-way function in a zero-knowledge proof when performing a digital signature, and an apparatus for implementing the same.

2. Description of the Prior Art

Recently, as the development of quantum computers capable of hacking standard public key cryptography such as RSA and elliptic curve cryptography has been accelerated, even after the invention of quantum computers, standardization and research on post-quantum cryptography (PQC), which is a safe password, are being actively conducted internationally.

A zero-knowledge proof (ZKP)-based a digital signature is a type of digital signature using post-quantum cryptography (PQC), and is rooted in the MPC-in-the-Head paradigm proposed by Ishai et al. at STOC in 2007.

As a representative example of a zero-knowledge proof (ZKP)-based digital signature, Picnic, which is a digital signature combining an MPC-in-the-Head zero-knowledge proof and a dedicated block cipher, is used.

A zero-knowledge proof-based digital signature using a block cipher, such as Picnic, uses that a pair of block cipher inputs and outputs is a one-way function value for the block cipher secret key, and the size of the signature is proportional to the number of nonlinear calculations such as bitwise AND calculation or S-box calculation of the block cipher. Because the block cipher passes through a number of rounds, the input and output of the nonlinear calculation have different values. On the other hand, if a design method that simply equalizes the input and output of nonlinear calculation is selected, there is a risk of exposing the secret key by an algebraic attack.

Zero-knowledge proof-based digital signatures using block ciphers perform multi-party computation (MPC) in parallel to ensure safety against algebraic attacks, which increases the number of nonlinear calculations in block ciphers, resulting in very large signature size. In addition, as the signature size increases, network transmission costs are increased.

In addition, a BN++ zero-knowledge proof is a zero-knowledge proof protocol that improved the BN zero-knowledge proof proposed by Baum and Nof in PKC2020 by Kales and Zaverucha in 2022. The BN++ zero-knowledge proof may be efficiently computed when multiplication is performed multiple times or when the result of multiplication is public. In the BN++ zero-knowledge proof-based digital signature, the signature size decreases as the redundancy of nonlinear calculation input/output increases. In the case of existing zero-knowledge proof-friendly block ciphers, there was a limit to reducing the signature size because the redundancy of input and output of nonlinear calculations could not be lowered below a certain level to ensure safety against algebraic attacks.

Further prior art solutions are disclosed in documents SEONGKWANG KIM ET AL: "AIM: Symmetric Primitive for Shorter Signatures with Stronger Security", IACR, INTERNATIONAL ASSOCIATION FOR CRYPTOLOGIC RESEARCH , vol. 20221026: 033949 26 October 2022 (2022-10-26), pages 1-22, and MELISSA CHASE ET AL: "Post-Quantum Zero-Knowledge and Signatures from Symmetric-Key Primitives", IACR, INTERNATIONAL ASSOCIATION FOR CRYPTOLOGIC RESEARCH, vol. 20170330: 123540, 27 March 2017 (2017-03-27), pages 1-25.

Accordingly, in designing a digital signature based on a zero-knowledge proof, a technology capable of dramatically reducing the signature size while ensuring safety against algebraic attacks is required.

SUMMARY OF THE INVENTION

The objects of the present invention are achieved by means of the appended set of claims.

A technical problem to be solved by the disclosure is to provide a calculation method using an efficient one-way function in a zero-knowledge proof, which is safe against algebraic attacks and is capable of reducing the signature size, in designing a digital signature based on a zero-knowledge proof, and a device for implementing the same.

Another technical problem to be solved by the disclosure is to provide, in designing a digital signature based on a zero-knowledge proof, a calculation method using a one-way function that is safe against algebraic attacks, for example, the signature size may be reduced when applied to a BN++ zero-knowledge proof, and efficient in a zero-knowledge proof by configuring a one-way function by using parallel application of large S-boxes and feedback operations, and a device for implementing the same.

Another technical problem to be solved by the disclosure is to provide, in designing a digital signature based on a zero-knowledge proof, a calculation method using a one-way function that is safe against algebraic attacks by constructing a one-way function using parallel application of a large S-box and feedback operation, but is efficient in zero-knowledge proofs, for example, when applied to BN++ zero-knowledge proofs, which may reduce the signature size, and a device for implementing the same.

The technical problems of the disclosure are not limited to the technical problems mentioned above, and other technical problems not mentioned will be clearly understood by those skilled in the art from the following description.

In order to solve the above technical problems, a calculation method using a one-way function in a zero-knowledge proof, performed by a processor in a device according to an embodiment of the disclosure may include calculating a second bit stream from one or more first substitution-boxes (S-boxes) by an input based on the first bit stream; calculating a third bit stream by inputting the second bit stream to a processing matrix; and calculating a fourth bit stream from one or more second S-boxes by an input based on the third bit stream.

As an embodiment, in the calculating of the second bit stream, the second bit stream may be calculated by parallelly inputting the input based on the first bit stream to two or more first S-boxes.

As an embodiment, the calculation method may further include generating a random initialization vector (IV), wherein in the calculating of the second bit stream, a result of calculating the first bit stream and the random IV may be input to one of the first S-boxes.

As an embodiment, in the calculating of the fourth bit stream, the fourth bit stream may be calculated by parallelly inputting the input based on the third bit stream to two or more second S-boxes.

As an embodiment, the calculation method may further include generating a random initialization vector (IV), wherein in the calculating of the fourth bit stream, a result of calculating the third bit stream and the random IV may be input to one of the second S-boxes.

As an embodiment, the calculation method may further include calculating an output bit stream, based on calculation of the fourth bit stream and the first bit stream.

As an embodiment, the calculation method may further include calculating an output bit stream, based on calculation for at least some of the bits constituting the fourth bit stream.

As an embodiment, in the calculation method, a length of the first bit stream may be n, the number of the one or more first S-boxes may be $\ell_1$, and the processing matrix may be an $\ell_2 n \times \ell_1 n$ matrix.

As an embodiment, in the calculation method, the third bit stream may be a bit stream having a length of $\ell_2 n$, the number of the one or more second S-boxes may be $\ell_2$, and in calculating the fourth bit stream, an input based on $\ell_2$ n bit streams divided from the third bit stream may be input to each of the second S-boxes.

As an embodiment, the calculation method may further include generating the processing matrix, wherein the generating the processing matrix may include configuring one row or one column of the processing matrix through random sampling, and configuring remaining rows or remaining columns of the processing matrix through a circular shift for the one row or one column.

As an embodiment, the calculation method may further include generating a random initialization vector (IV), and generating the processing matrix, wherein in the generating the processing matrix, the processing matrix may be generated by generating a linear layer from the random IV.

As an embodiment, the calculation method may further include generating the processing matrix, wherein in the generating the processing matrix, all rows or all columns of the processing matrix may be configured with random values.

As an embodiment, the calculation method may further include performing zero-knowledge proof-based digital signature by using an input bit stream, which is the first bit stream and an output bit stream obtained based on the fourth bit stream.

As an embodiment, the performing digital signature may include configuring the input bit stream and the output bit stream as a secret key and a public key of the digital signature, respectively, and generating signature data for the digital signature by inputting the secret key and the public key into the prove function for the zero-knowledge proof.

In order to solve the above technical problems, a computer-readable storage medium according to an embodiment of the disclosure may be a computer-readable storage medium storing instructions, when executed by a processor, causing a device including the processor to perform an operation for a calculation using a one-way function in a zero-knowledge proof, the operation may include calculating a second bit stream from one or more first substitution-boxes (S-boxes) by an input based on the first bit stream, calculating a third bit stream by inputting the second bit stream to a processing matrix, and calculating a fourth bit stream from one or more second S-boxes by an input based on the third bit stream.

In order to solve the above technical problems, a device according to an embodiment of the disclosure may include a processor, wherein the processor may be configured to perform calculating a second bit stream from one or more first S-boxes (Substitution-boxes) by an input based on the first bit stream, calculating a third bit stream by inputting the second bit stream to a processing matrix, and calculating a fourth bit stream from one or more second S-boxes by an input based on the third bit stream.

As an embodiment, in the calculating of the second bit stream, the second bit stream may be calculated by parallelly inputting the input based on the first bit stream to two or more first S-boxes.

As an embodiment, in the calculating of the fourth bit stream, the fourth bit stream may be calculated by parallelly inputting the input based on the third bit stream to two or more second S-boxes.

As an embodiment, the processor may be configured to perform calculating an output bit stream, based on calculation of the fourth bit stream and the first bit stream.

As an embodiment, the processor may be configured to perform calculating an output bit stream, based on calculation for at least some of the bits constituting the fourth bit stream.

According to one aspect of the disclosure, in designing a digital signature based on zero-knowledge proof, it is possible to reduce the size of the signature while being safe against algebraic attacks.

In addition, according to another aspect of the disclosure, in designing a zero-knowledge proof-based digital signature, it is possible to provide a calculation method using a one-way function that is safe and has improved signature size, and is efficient in zero-knowledge proofs by using a large S-box with a high algebraic order to defend against algebraic attacks, and by proposing a one-way function using parallel application of the large S-box, and a device for implementing the same.

In addition, according to another aspect of the disclosure, in designing a zero-knowledge proof-based digital signature, it is possible to provide a calculation method using a one-way function that is safe against algebraic attacks by configuring a one-way function using parallel application of a large S-box and feedback operation, and, for example, the signature size is small when applied to a BN++ zero-knowledge proof, and a device for implementing the same.

In addition, an efficient one-way function in a zero-knowledge proof according to another aspect of the disclosure provides very high efficiency when the redundancy of nonlinear calculation input/output is high. In general block ciphers such as AES and the like, several rounds are repeated, so the repeated multiplier method of a BN++ zero-knowledge proof cannot be used because the redundancy of nonlinear calculation is low, but if the redundancy of nonlinear calculation input/output is high, the repeated multiplier method may be used as much as the redundancy may be used, further reducing the signature length. In addition, in the case of a large S-Box, it is implemented as a polynomial calculation on the finite field $F_2n$. For parameters such as n = 128,192,256 that may be used in digital signature design, the polynomial calculation on the finite field does not occupy a large proportion compared to extracting a random bit stream of a fixed length in the entire signature generation, so the polynomial calculation on the finite field may be implemented very efficiently. Focusing on this point, when using the one-way function presented in the disclosure, because the inputs of the first round S-box and the outputs of the second round S-box are duplicated, there is an advantage in making the most of the repeated multiplier method of the BN++ zero-knowledge proof. As a result, it is possible to design a digital signature safely while significantly reducing the signature size of the zero-knowledge proof-based PQC digital signature.

In addition, an efficient one-way function in a zero-knowledge proof according to another aspect of the disclosure provides very high safety when redundancy of nonlinear calculation input/output is high. The zero-knowledge proof-based digital signature is safe from statistical attacks because only a pair of plaintext and ciphertext is given, and because a large S-Box with a high order is used on the finite field $F_2n$, the algebraic order of the entire structure is high, making it possible to design an efficient digital signature safe from algebraic attacks.

In addition, an efficient one-way function in a zero-knowledge proof according to another aspect of the disclosure may add a simple process of performing a linear calculation (e.g., XOR) of each user's IV at a specific location in the internal logic when there are a large number of signing users, thereby ensuring more safety.

## BRIEF DESCRIPTION OF THE DRAWINGS

The above and other aspects, features and advantages of the disclosure will be more apparent from the following detailed description taken in conjunction with the accompanying drawings, in which:

FIG. 1 is a flowchart illustrating a calculation method using an efficient one-way function in a zero-knowledge proof according to an embodiment of the disclosure;

FIG. 2 is an example illustrating the entire process of constructing an efficient one-way function in a zero-knowledge proof according to an embodiment of the disclosure;

FIG. 3 is an example illustrating the entire process of constructing an efficient one-way function in a zero-knowledge proof according to another embodiment of the disclosure;

FIG. 4 is an example of a formula for constructing a one-way function calculated in each operation of the entire process of FIGS. 2 and 3.

FIG. 5 is a flowchart illustrating detailed processes of some operations illustrated in FIG. 1;

FIG. 6 is a flowchart illustrating detailed processes of some operations illustrated in FIG. 1;

FIG. 7 is a flowchart illustrating detailed processes of an embodiment in which some operations are added to the embodiment illustrated in FIG. 1;

FIG. 8 is a flowchart illustrating detailed processes of an embodiment in which some operations are added to the embodiment illustrated in FIG. 1;

FIG. 9 is a flowchart illustrating detailed processes of an embodiment in which some operations are added to the embodiment illustrated in FIG. 1;

FIG. 10 is a flowchart illustrating a method of generating a processing matrix according to an embodiment of the disclosure;

FIG. 11 is a flowchart illustrating a method of generating a processing matrix according to an embodiment of the disclosure;

FIG. 12 is a flowchart illustrating a method of performing a digital signature according to an embodiment of the disclosure;

FIG. 13 is an example illustrating input/output values when performing three algorithms for digital signature according to an embodiment of the disclosure;

and

FIG. 14 is a hardware configuration diagram of an exemplary computing device capable of implementing methods in accordance with an embodiment of the disclosure.

DETAILED DESCRIPTION OF THE EXEMPLARY EMBODIMENTS

Hereinafter, preferred embodiments of the disclosure will be described in detail with reference to the accompanying drawings. Advantages and features of the disclosure and methods for achieving them will become clear with reference to the embodiments described below in detail together with the accompanying drawings. However, the technical idea of the disclosure is not limited to the following embodiments and may be implemented in various different forms, the following embodiments are merely provided to complete the technical idea of the disclosure and to completely inform those skilled in the art of the scope of the disclosure, and the technical idea of the disclosure is only defined by the scope of the claims.

In adding reference numerals to the components of each drawing, it should be noted that the same components have the same numerals as much as possible even if they are displayed on different drawings. In addition, in describing the disclosure, when it is determined that a detailed description of a related known configuration or function may obscure the scope of the disclosure, the detailed description will be omitted.

Unless otherwise defined, all terms (including technical and scientific terms) used in this specification may be used with meanings commonly understood by those of ordinary skill in the art to which this disclosure belongs. In addition, terms defined in commonly used dictionaries are not interpreted ideally or excessively unless specifically defined explicitly. Terms used in this specification is for describing the embodiments and is not intended to limit the disclosure. In this specification, singular forms also include plural forms unless specifically stated otherwise in a phrase.

In addition, terms such as first, second, A, B, (a), and (b) may be used in describing the components of the disclosure. These terms are only used to distinguish the component from other components, and the nature, turn, or order of the corresponding component is not limited by the term. When a component is described as being "connected", "coupled", or "joined" to another component, it should be understood that the components may be directly connected or joined to the other components, but another component may be "connected", "coupled" or "joined" between each component.

"Comprises" and/or "comprising" used in this specification does not preclude the presence or addition of one or more other elements, steps, operations and/or devices mentioned.

Hereinafter, some embodiments of the disclosure will be described in detail with reference to the accompanying drawings.

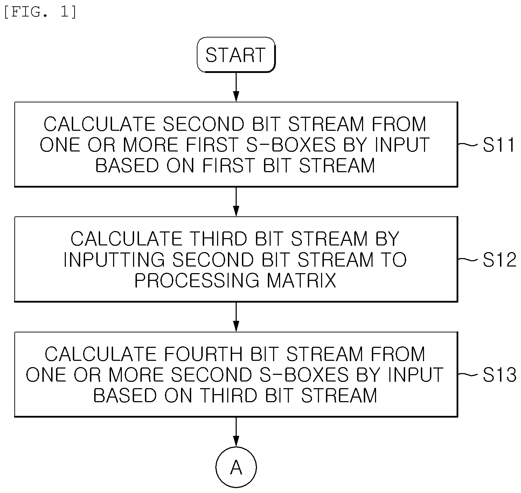

FIG. 1 is a flowchart illustrating a calculation method using an efficient one-way function in a zero-knowledge proof according to an embodiment of the disclosure.

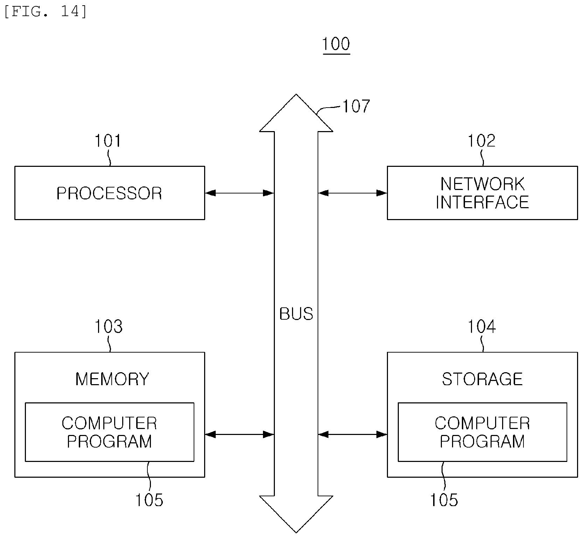

A calculation method using an efficient one-way function in a zero-knowledge proof according to an embodiment of the disclosure may be implemented by including a computing device 100 described below with reference to FIG. 14. For example, the computing device 100 may include a processor 101, and the processor 101 may execute instructions configured to implement an operation for performing a calculation using an efficient one-way function in a zero-knowledge proof. The computing device 100 that executes the method according to the embodiment may be a computing device having an application program execution environment. The computing device 100 may be, for example, a device capable of performing calculating functions, such as a PC, a server, a notebook computer, or a smartphone.

It should be noted that description of a subject performing some operations included in the method according to an embodiment of the disclosure may be omitted, and in such case, the subject is the computing device 100.

According to an embodiment of the disclosure described below, an efficient one-way function may be constructed in a zero-knowledge proof (ZKP).

First, in operation S11, the computing device 100 calculates a second bit stream from one or more first S-boxes (Substitution-boxes) by input based on the first bit stream. Here, the first bit stream may be an input bit stream.

In addition, in operation S12, the second bit stream is input to a processing matrix to calculate a third bit stream, and further, in operation S13, a fourth bit stream is calculated from one or more second S-boxes based on the input based on the third bit stream.

With such a one-way function, it is possible to implement a zero-knowledge proof-based digital signature that is secure and has an improved signature size by defending against algebraic attacks.

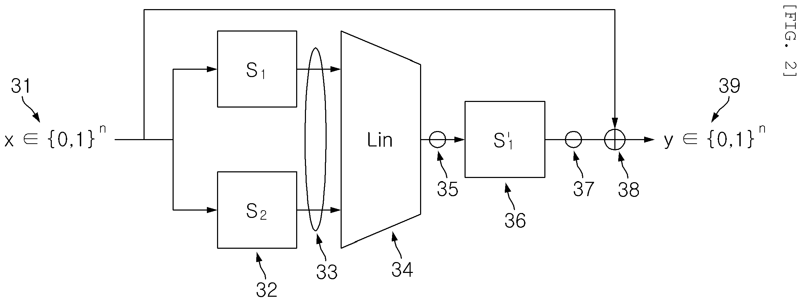

FIG. 2 is an example illustrating the entire process of constructing an efficient one-way function in a zero-knowledge proof according to an embodiment of the disclosure.

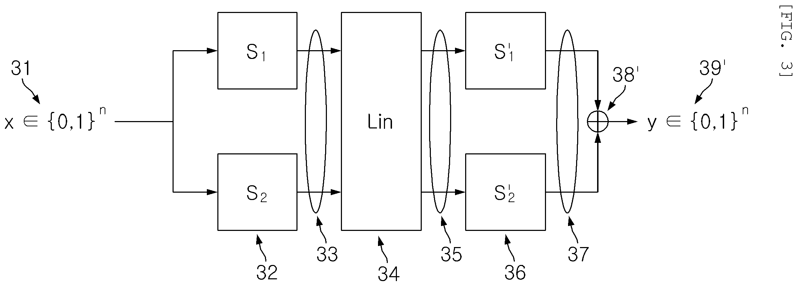

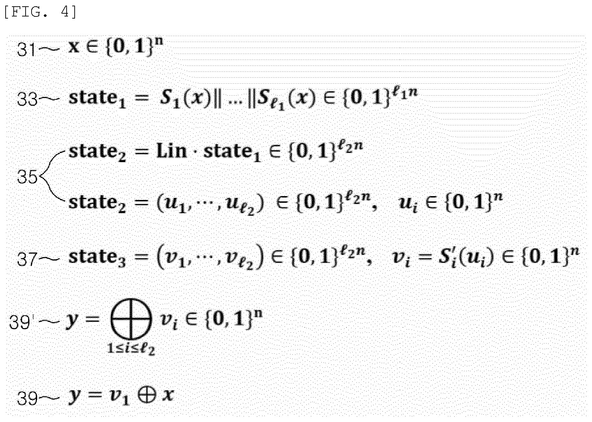

The formula used for calculation in each step of the entire process of FIG. 2 may refer to FIG. 4. FIG. 4 is an example of a formula for constructing a one-way function calculated at each step of the entire process of each embodiment illustrated in FIGS. 2 and 3.

First, the computing device 100 may configure the following parameters and one-way function components in advance in order to construct an efficient one-way function in a zero-knowledge proof.

n: one-way function input/output bit stream length
$\ell_1$: number of S-boxes (first S-box) in the first round
$\ell_2$: number of S-boxes (second S-box) in the second round

<one-way function component>

$\ell_2 n \times \ell_1 n$ binary matrix Lin
High-order n-bit round 1 S-box $S_1, \ldots, S_{\ell_1}$ in the finite field $F_2 n$.
High-order *n*-bit second-round S-box $S_1', \ldots, S_{\ell_2}'$ in the finite field $F_2 n$

Here, parameters n, $\ell_1$, and $\ell_2$ may be configured to ensure safety against algebraic attacks while minimizing the signature size of the digital signature. In addition, a large S-box (e.g., n≥128) may be used to increase attack complexity for algebraic attacks.

Referring to FIGS. 2 and 4, the computing device 100 calculates a second bit stream (state1) 33 by inputting the input 31 based on the *n*-bit first bit stream to one or more first S-boxes (Substitution-boxes) 32. Here, because the number of first S-boxes 32 may be $\ell_1$, the second bit stream (state1) 33 becomes $\ell_1 n$ bits. FIG. 2 is an example of a case where there are two first S-boxes 32.

The computing device 100 calculates a third bit stream (state2) 35 by inputting the second bit stream (state1) 33 to the processing matrix Lin 34. Here, the processing matrix may be an $\ell_2 n \times \ell_1 n$ binary matrix.

In addition, the computing device 100 calculates a fourth bit stream (state3) 37 from one or more second S-boxes 36 by the input based on the third bit stream (state2) 35. Here, because the second S-boxes 36 may be $\ell_2$ pieces, the fourth bit stream (state3) 37 becomes $\ell_2 n$ bits. FIG. 2 is an example of a case where the second S-box 36 is designed as one.

As an embodiment, when the second S-box 36 is one as illustrated in FIG. 2, the computing device 100 may calculate the output bit stream 39 based on the calculation of the fourth bit stream (state3) 37 and the first bit stream 31. FIGS. 2 and 4 illustrate cases in which the exclusive OR (XOR) calculation 38 is applied, but various operations may be applied without being limited thereto.

On the other hand, FIG. 3 is an example illustrating the entire process of constructing an efficient one-way function in a zero-knowledge proof according to another embodiment of the disclosure.

Most of the contents discussed with reference to FIGS. 2 and 4 above are also applied to the embodiment of FIG. 3 as they are, but the embodiment of FIG. 3 is different in that it illustrates a case in which the second S-box 36 is two. As an embodiment, as illustrated in FIG. 3, when the number of second S-boxes 36 is greater than 1 (i.e., $\ell_2 > 1$)), the computing device 100 may calculate an output bit stream based on a calculation on at least some of the bits configuring the fourth bit stream (state3) 37 to obtain an n-bit output bit stream 39' as illustrated in FIGS. 3 and 4. FIGS. 3 and 4 illustrates a case in which an exclusive OR (XOR) operation 38' is applied to the output of each second S-box 36 among the respective bits configuring the fourth bit stream (state3) 37, but various operations may be applied without being limited thereto.

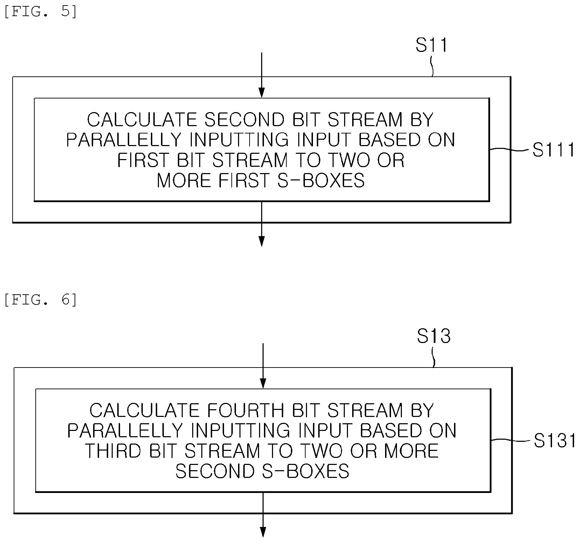

FIG. 5 is a flowchart illustrating detailed processes of some operations S11 illustrated in FIG. 1.

In the illustrated embodiment, in order to calculate the second bit stream (state1) 33, the computing device 100, in operation S111, may calculate the second bit stream (state1) 33 by parallelly inputting the input based on the first bit stream 31 to two or more first S-boxes 32.

FIG. 6 is a flowchart illustrating detailed processes of some operations S13 illustrated in FIG. 1.

In the illustrated embodiment, in order to calculate the fourth bit stream (state3) 37, the computing device 100, in operation S131, may calculate the fourth bit stream (stat3) 37 by parallelly inputting the input based on the third bit stream 35 to two or more second S-boxes 36.

In this way, it is possible to provide a calculation method using a one-way function that is secure and has an improved signature size, and an efficient one-way function in a zero-knowledge proof through a one-way function using parallel application of large S-boxes, and a device for implementing the same.

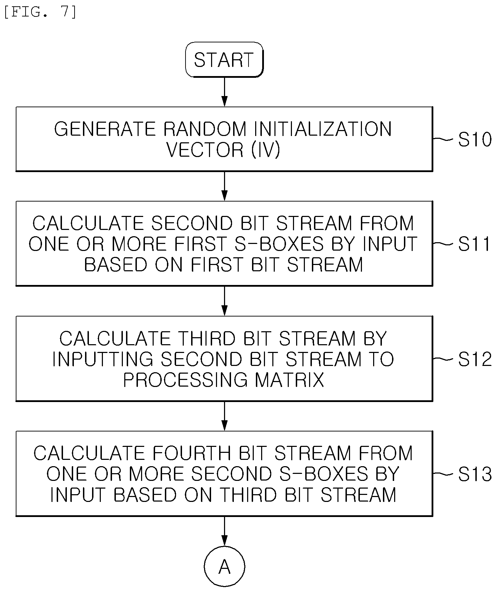

FIG. 7 is a flowchart illustrating detailed processes of an embodiment in which some operations are added to the embodiment illustrated in FIG. 1.

In the illustrated embodiment, in operation S10, the computing device 100 may further include an operation of generating a random initialization vector (IV), input a result of calculating the first bit stream 31 and the random IV to any one of the first S-box 32 in operation S11 of calculating the second bit stream (state1) 33, or input a result of calculating the third bit stream (state2) 35 and the random IV to any one of the second S-boxes 36 in operation S13 of calculating the fourth bit stream (state3) 37.

Through this operation, when there are multiple users, a random IV may be allocated to each user to configure a one-way function differently. For example, when there are multiple users, different one-way functions may be configured for each user through a linear calculation with an n-bit wire input of either the first S-box 32 or the second S-box 36 of FIG. 2 or FIG. 3, based on n-bit random IV $\in \{0,1\}^n$. For the remaining operation of FIG. 7, the contents described above based on FIG. 1 are applied.

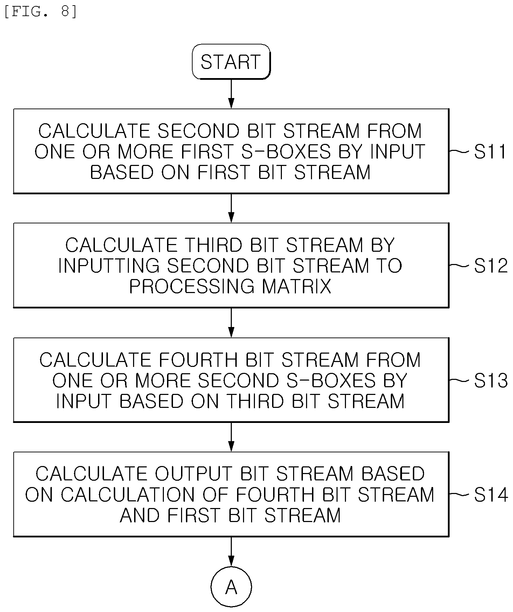

FIG. 8 is a flowchart illustrating detailed processes of an embodiment in which some operations are added to the embodiment illustrated in FIG. 1.

As an embodiment, when the second S-box 36 is one as illustrated in FIG. 2, in operation S14, the computing device 100 may calculate the output bit stream 39 based on the calculation of the fourth bit stream (state3) 37 and the first bit stream 31. FIGS 2 and 4 illustrates a case in which the exclusive OR (XOR) calculation 38 is applied, but various operations may be applied without being limited thereto.

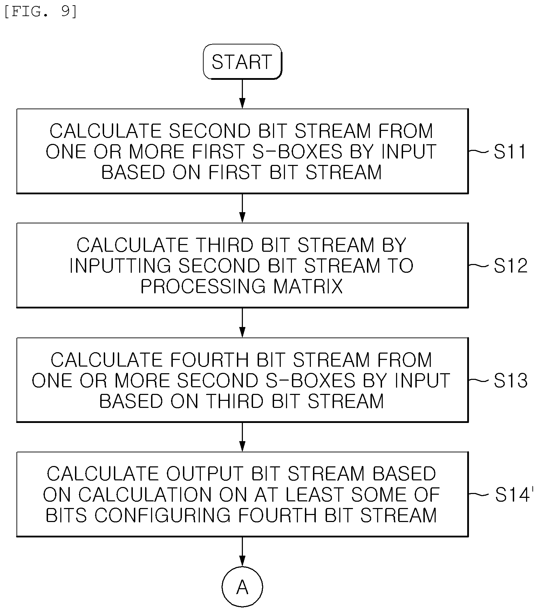

FIG. 9 is a flowchart illustrating detailed processes of an embodiment in which some operations are added to the embodiment illustrated in FIG. 1.

As an embodiment, as illustrated in FIG. 3, when the number of second S-boxes 36 is greater than 1 (i.e., $\ell_2 > 1$), in operation S14', as illustrated in FIGS. 3 and 4, the computing device 100 may calculate an output bit stream based on a calculation on at least some of the bits configuring the fourth bit stream (state3) 37 to obtain an n-bit output 39'. FIGS 3 and 4 illustrates a case in which the exclusive OR (XOR) operation 38' is applied to the output of each second S-box 36 among the respective bits configuring the fourth bit stream (state3) 37, but various operations may be applied without being limited thereto.

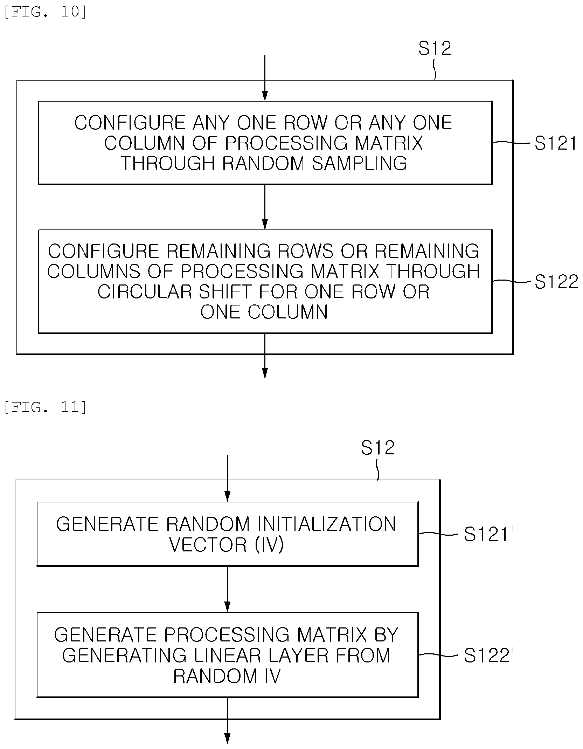

FIG. 10 is a flowchart illustrating a method of generating a processing matrix (Lin) according to an embodiment of the disclosure

As an embodiment, in operation S12 or during other suitable processes, the computing device 100 may further include a process of generating the processing matrix, and for the process of generating the processing matrix, the computing device 100 may perform operation S121 of configuring any one row or any one column of the processing matrix through random sampling and operation S122 of configuring the remaining rows or remaining columns of the processing matrix through a circular shift for the one row or one column.

As a specific example, in order to generate the processing matrix (Lin) 34 in FIGS. 2 and 3, column 1 of the processing matrix (Lin) 34 may be composed of random values, and the $i^{th}$ column of the processing matrix (Lin) 34 may be composed of a vector obtained by moving one column below the $(i-1)^{th}$ column (however, $2 \le i \le \ell_2 n$). That is, from column 2 to column $\ell_2 n$ of the processing matrix (Lin) 34, a method of moving the previous column downward may be sequentially applied, or row 1 of the processing matrix (Lin) 34 may be configured with a random value, and the $i^{th}$ row of the processing matrix (Lin) 34 may be composed of a vector obtained by moving the $(i-1)^{th}$ row downward by one space (however, $2 \le i \le \ell_1 n$). That is, from row 2 to row $\ell_1 n$ of the processing matrix (Lin) 34, it is possible to configure a matrix in which values are circularly shifted as a result of sequentially applying a method of shifting the immediately previous row downward. In this way, the method of configuring a matrix through cyclic shift may provide an effect of maintaining the amount of input information as it is when outputting.

In the above, in order to generate a processing matrix, a method of configuring one row or column with random values and configuring the remaining rows or columns through cyclic shift has been described, but is not limited to this method.

As an embodiment, when generating an extension matrix and a reduction matrix, a method of configuring all rows or all columns with random values may be applied.

FIG. 11 is a flowchart illustrating a method of generating a processing matrix according to an embodiment of the disclosure.

As an embodiment, the computing device 100, in operation S12 or during other suitable process, may further include a process of generating the processing matrix, perform operation S121' of generating a random initialization vector (IV) and operation S122' of generating the processing matrix for the process of generating the processing matrix, and generate the processing matrix by generating a linear layer from the random IV in operation S122 ' of generating the processing matrix. Through this operation, when there are multiple users, a random IV may be allocated to each user to configure a one-way function differently. For example, when there are multiple users, different one-way functions may be configured for each user by generating a linear layer to generate the processing matrix based on the n-bit random IV $\in \{0,1\}^n$.

Some one-way function components of the above-described embodiments may be summarized as follows.

### <Example 1>

A one-way function component is defined as follows.

    1. extendable output function XOF:$\{0,1\}^n \to \{0,1\}^*$
    2. High-order n-bit first round S-box $S_1, \ldots, S_{\ell_1}$, in the finite field $F_2 n$

-    Nonlinear S-box $S_i$: $F_2 n \to F_2 n$ is defined as follows.

$$S_i(x) = x^{2^{e_i}-1} \text{ in } F_{2^\ell}$$

    3. High-order n-bit second round S-box $S_1', \ldots, S_{\ell_2}'$ in the finite field $F_2 n$

-    Nonlinear S-box $S_i'$: $F_2 n \to F_2 n$ is defined as follows.

$$S_i'(x) = x^{2^{e_i'}-1} \text{ in } F_{2^n}$$

**<Example 2>**

A one-way function component is defined as follows.

 *1.* $\ell_2 n \times \ell_1 n$ binary matrix Lin is defined as follows.

 Randomly sample first row of Lin.
 For $2 \le i \le \ell_2 n$, the ith row of Lin is defined as a vector rotated one space to the right of the (i-1)th row.

 2. High-order n-bit first round S-box $S_1, ... , S_{\ell_1}$ in the finite field $F_2 n$

 - Nonlinear S-box $S_i$: $F_2 n \rightarrow F_2 n$ is defined as follows.

$$S_i(x) = x^{2^{e_i}-1} \text{ in } F_{2^\ell}$$

 3. High-order n-bit second round S-box $S_1', ... , S_{\ell_2}'$ in the finite field $F_2 n$

 - Nonlinear S-box $S_i'$: $F_2 n \rightarrow F_2 n$ is defined as follows.

$$S_i'(x) = x^{2^{e_i'}-1} \text{ in } F_{2^n}$$

**<Example 3>**

When there are multiple users, a one-way function may be configured by adding a random IV to ensure the safety of multiple users.

A one-way function component is defined as follows.

 1. $\ell_2 n \times \ell_1 n$ random binary matrix Lin
 2. High-order n-bit first round S-box $S_1, ... , S_{\ell_1}$ in the finite field $F_2 n$

 - Nonlinear S-box $S_i$: $F_2 n - F_2 n$ is defined as follows.

$$S_i(x) = x^{2^{e_i}-1} \text{ in } F_{2^\ell}$$

 3. High-order n-bit second round S-box $S_1', ... , S_{\ell_2}'$ in the finite field $F_2 n$

 - Nonlinear S-box $S_i'$: $F_2 n \rightarrow F_2 n$ is defined as follows.

$$S_i'(x) = x^{2^{e_i'}-1} \text{ in } F_{2^n}$$

 4. An n-bit random IV is additionally XOR calculated to the input value of S-box S_1 in first round .

**<Example 4>**

When there are multiple users, a one-way function may be configured by generating linear layers from random IVs to ensure the safety of multiple users.

A one-way function component is defined as follows.

 1. extendable output function XOF:$\{0,1\}^n \rightarrow \{0,1\}^*$
 2. High-order n-bit first round S-box $S_1, ... , S_{\ell_1}$, in the finite field $F_2 n$

 - Nonlinear S-box $S_i$: $F_2 n \rightarrow F_2 n$ is defined as follows.

$$S_i(x) = x^{2^{e_i}-1} \text{ in } F_{2^\ell}$$

 3. High-order n-bit second round S-box $S_1', ... , S_{\ell_2}'$ in the finite field $F_2 n$

 - Nonlinear S-box $S_i'$: $F_2 n \rightarrow F_2 n$ is defined as follows.

$$S_i'(x) = x^{2^{e_i'}-1} \text{ in } F_{2^n}$$

 4. Generating $\ell_2 n \times \ell_1 n$ random binary matrix Lin from XOF(IV).

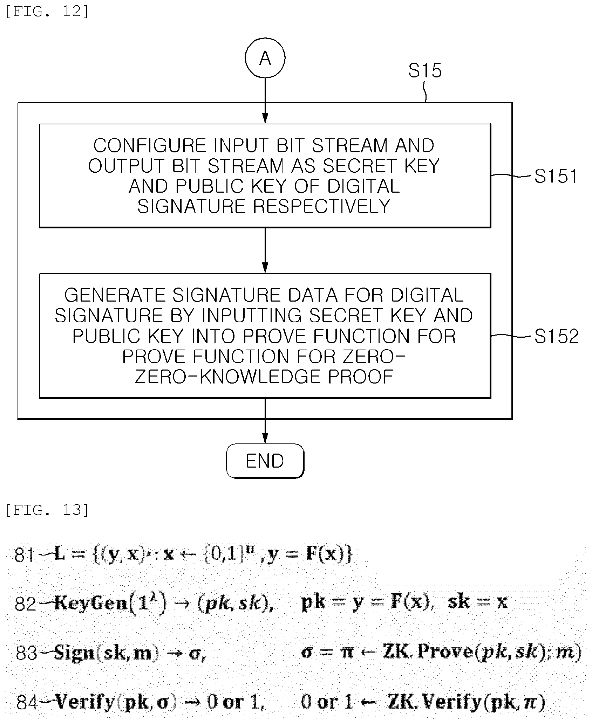

FIG. 12 is a flowchart illustrating a method of performing a digital signature according to an embodiment of the disclosure. Referring to FIG. 12, when an efficient one-way function is configured in a zero-knowledge proof through the above-described embodiments, an operation S15 of performing a digital signature using the one-way function may be additionally performed.

As an embodiment, in operation S15, the computing device 100 may perform the digital signature based on a zero-knowledge proof using an input bit stream and an output bit stream of a one-way function.

In this case, operation S15 may include operation S151 of configuring the input bit stream and the output bit stream as the secret key and public key of the digital signature, respectively and operation S152 of generating signature data for digital signature by inputting the secret key and public key into a prove function for a zero-knowledge proof.

FIG. 13 is an example illustrating input/output values when performing three algorithms for digital signature according to an embodiment of the disclosure.

Referring to FIG. 13, three algorithms may be sequentially performed to perform digital signature based on a zero-knowledge proof by using an input bit stream and an output bit stream of a one-way function. The three algorithms of the digital signature may be composed of, for example, a key generation part 82, a signature generation part 83, and a key verification part 84.

As an example, when an efficient one-way function F(x) is configured in the zero-knowledge proof in which an input bit stream (x) of length n is input and an output bit stream (y) of length n is output, the key generation part 82, the signature generation part 83, and the key verification part 84 may be sequentially performed for a set L(y, x) 81.

First, in the key generation part 82, the computing device 100 may generate a random value having a length of n for the safety parameter λ as an input bit stream (x), and set a secret key (sk) and a public key (pk) of the digital signature by using the random value. In this case, the input bit stream (x) may be set as the secret key (sk) of the digital signature, and the output bit stream (y=F(x)) of the one-way function may be set as the public key (pk) of the digital signature.

Next, in the signature generation part 83, the computing device 100 may input the secret key (sk) and public key (pk) previously set in the key generation part 82 together with the message (m) into the prove function (ZK.Prove) for the zero-knowledge proof to generate signature data (σ) for digital signature.

Finally, in the key verification part 84, the computing device 100 may input the signature data (σ) and the public key (pk) generated in the signature generation part 83 to a verification function (ZK.Verify) for zero-knowledge verification to output the verification result. In this case, the verification result value is output as 0 or 1, and when the verification result value is 1, it means that the verifier succeeded in generating the signature without knowing the secret key (sk).

According to the embodiment of the disclosure as described above, in generating a zero-knowledge proof-based digital signature, it is possible to provide the effect of significantly reducing the signature size while being safe against algebraic attacks by configuring an efficient one-way function in a zero-knowledge proof.

FIG. 14 is a hardware configuration diagram of an exemplary computing device capable of implementing methods in accordance with an embodiment of the disclosure. As illustrated in FIG. 14, the computing device 100 may include one or more processors 101, a bus 107, a network interface 102, a memory 103 loading a computer program 105 executed by the processor 101, and a storage 104 that stores the computer program 105. However, only components related to the embodiment of the disclosure are illustrated in FIG. 14. Accordingly, those skilled in the art to which the disclosure pertains may know that other general-purpose components may be further included in addition to the components illustrated in FIG. 14.

The processor 101 controls the overall operation of each component of the computing device 100. The processor 101 may be configured by including at least one of a central processing unit (CPU), a micro-processor unit (MPU), a micro controller unit (MCU), a graphic processing unit (GPU), or any type of processor well known in the art of the disclosure. In addition, the processor 101 may perform a calculation for at least one application or program for executing a method/operation according to various embodiments of the disclosure. The computing device 100 may include one or more processors.

The memory 103 stores various data, commands and/or information. The memory 103 may load one or more programs 105 from storage 104 to execute methods/operations according to various embodiments of the disclosure. For example, when the computer program 105 is loaded into the memory 103, logic (or modules) may be implemented on the memory 103. An example of the memory 103 may be RAM, but is not limited thereto.

The bus 107 provides communication between components of the computing device 100. The bus 107 may be implemented in various types of buses such as an address bus, a data bus, and a control bus.

The network interface 102 supports wired and wireless Internet communication of the computing device 100. The network interface 102 may support various communication methods other than Internet communication. To this end, the network interface 102 may include a communication module well known in the art.

The storage 104 may non-temporarily store one or more computer programs 105. The storage 104 may include a nonvolatile memory such as a flash memory, a hard disk, a removable disk, or any type of computer-readable recording medium well known in the art.

The computer program 105 may include one or more instructions in which methods/operations according to various embodiments of the disclosure are implemented. When the computer program 105 is loaded into the memory 103, processor 101 may execute the one or more instructions to perform methods/operations according to various embodiments of the disclosure.

As an embodiment, the computer program 105 may include instructions to perform inputting an input bit stream of a one-way function into an extension matrix to calculate a first intermediate bit stream, dividing the first intermediate bit stream into a predetermined number of bit streams and inputting each of the divided predetermined number of bit streams into a substitution-box (S-box) to calculate a second intermediate bit stream, and inputting the second intermediate bit stream to a reduction matrix to output an output bit stream of the one-way function.

Various embodiments of the disclosure and effects according to the embodiments have been described with reference to FIGS. 1 to 9. Effects according to the technical idea of the disclosure are not limited to the effects mentioned above, and other effects not mentioned will be clearly understood by those skilled in the art from the description below.

The technical idea of the disclosure described so far may be implemented as computer-readable code on a computer readable medium. The computer-readable recording medium may be, for example, a portable recording medium (CD, DVD, Blu-ray disc, USB storage device, removable hard disk) or a fixed recording medium (ROM, RAM, computer-equipped hard disk). The computer program recorded on the computer-readable recording medium may be transmitted to another computing device through a network such as the Internet, and the like, installed in the other computing device, and thus used in the other computing device.

In the above, even though all the components configuring the embodiment of the disclosure have been described as being combined or operated as one, the technical idea of the disclosure is not necessarily limited to these embodiments. That is, within the scope of the object of the disclosure, all of the components may be selectively combined with one or more to operate.

Although operations are illustrated in a particular order in the diagrams, it should not be understood that the operations must be performed in the particular order illustrated or in a sequential order, or that all illustrated operations must be performed to obtain a desired result. In certain circumstances, multitasking and parallel processing may be advantageous. Moreover, the separation of various components in the embodiments described above should not be understood as requiring such separation, but it should be understood that the described program components and systems may generally be integrated together into a single software product or packaged into multiple software products.

Although the embodiments of the disclosure have been described with reference to the accompanying drawings, those skilled in the art to which the disclosure pertains may understand that the disclosure may be implemented in other specific forms without changing the technical scope or essential characteristics. Therefore, it should be understood that the embodiments described above are illustrative in all respects and not limiting. The protection scope of the disclosure should be construed according to the claims below, and all technical ideas within the equivalent range should be construed as being included in the scope of the technical ideas defined by the disclosure.

**Claims**

1. A method for performing a digital signature using a one-way function in a zero-knowledge proof, performed by a processor (101) in a device (100), the method comprising:

    calculating a second bit stream (33) from one or more first substitution-boxes, S-boxes, (32) by an input bit stream of the digital signature based on a first bit stream (31); and
    calculating a third bit stream (35) by inputting the second bit stream (33) to a processing matrix (34);

**characterized by**
calculating a fourth bit stream (37) by parallelly inputting an input based on the third bit stream (35) to two or more second S-boxes (36).

2. The method of claim 1, wherein in the calculating of the second bit stream (33), the second bit stream (33) is calculated by parallelly inputting the input based on the first bit stream (31) to two or more first S-boxes (32).

3. The method of claim 1, further comprising generating a random initialization vector, IV,
wherein in the calculating of the second bit stream (33), a result of calculation of the first bit stream (31) and the random IV is input to one of the first S-boxes (32).

4. The method of claim 1, further comprising generating a random initialization vector, IV,
wherein in the calculating of the fourth bit stream (37), a result of calculation of the third bit stream (35) and the random IV is input to one of the second S-boxes (36).

5. The method of claim 1, further comprising calculating an output bit stream, based on calculation of the fourth bit stream (37) and the first bit stream (31).

6. The method of claim 1, further comprising calculating an output bit stream, based on calculation for at least some of the bits constituting the fourth bit stream (37).

7. The method of claim 1, wherein a length of the first bit stream (31) is n,

    the number of the one or more first S-boxes (32) is $\ell_1$, and
    the processing matrix (34) is an $\ell_2 n \times \ell_1 n$ matrix.

8. The method of claim 1, wherein the third bit stream (35) is a bit stream having a length of $\ell_2 n$,

    the number of the two or more second S-boxes (36) is $\ell_2$, and
    in calculating of the fourth bit stream (37), an input based on $\ell_2 n$ bit streams divided from the third bit stream (35) is input to each of the second S-boxes (36).

9. The method of claim 1, further comprising generating the processing matrix (34),
wherein the generating of the processing matrix (34) comprises:

    configuring one row or one column of the processing matrix (34) through random sampling;

and

configuring remaining rows or remaining columns of the processing matrix (34) through a circular shift for the one row or one column.

10. The method of claim 1, further comprising:

generating a random initialization vector, IV; and generating the processing matrix (34), wherein in the generating of the processing matrix (34), the processing matrix (34) is generated by generating a linear layer from the random IV.

11. The method of claim 1, further comprising generating the processing matrix (34), wherein in the generating of the processing matrix (34), all rows or all columns of the processing matrix (34) are configured with random values.

12. The calculation method of claim 1, further comprising performing zero-knowledge proof-based digital signature by using the input bit stream, which is the first bit stream, and the output bit stream obtained based on the fourth bit stream.

13. The method of claim 1, further comprising

configuring the input bit stream and the output bit stream as a secret key and a public key of the digital signature, respectively; and generating signature data for the digital signature by inputting the secret key and the public key into the prove function for the zero-knowledge proof.

14. A computer-readable storage medium storing instructions that, when executed by a processor (101), cause a device (100) including the processor (101) to perform operations for performing a digital signature using a one-way function in a zero-knowledge proof, the operations comprising:

calculating a second bit stream (33) from one or more first substitution-boxes, S-boxes, by an input bit stream of the digital signature based on a first bit stream (31); and calculating a third bit stream (35) by inputting the second bit stream (33) to a processing matrix (34); **characterized by** calculating a fourth bit stream (37) by parallelly inputting an input based on the third bit stream (35) to two or more second S-boxes (36).

15. A device (100) including a processor (101), wherein the processor (101) is configured to perform a digital signature comprising the steps:

calculating a second bit stream (33) from one or more first S-boxes, Substitution-boxes, (32) by an input bit stream of the digital signature based on a first bit stream (31); and calculating a third bit stream (35) by inputting the second bit stream (33) to a processing matrix (34); **characterized by** calculating a fourth bit stream (37) by parallelly inputting an input based on the third bit stream (35) to two or more second S-boxes (36).

16. The device (100) of claim 15, wherein in the calculating of the second bit stream (33), the second bit stream (33) is calculated by parallelly inputting the input based on the first bit stream (31) to two or more first S-boxes (32).

**Patentansprüche**

1. Verfahren zum Durchführen einer digitalen Signatur unter Verwendung einer einseitigen Funktion in einem kenntnisfreien Beweis, das durch einen Prozessor (101) in einer Vorrichtung (100) durchgeführt wird, wobei das Verfahren Folgendes umfasst:

Berechnen eines zweiten Bitstroms (33) aus einem oder mehreren ersten Substitutionskästen, S-Kästen, (32) durch einen Eingabebitstrom der digitalen Signatur auf der Grundlage eines ersten Bitstroms (31); und Berechnen eines dritten Bitstroms (35) durch Eingeben des zweiten Bitstroms (33) in eine Verarbeitungsmatrix (34); **gekennzeichnet durch** Berechnen eines vierten Bitstroms (37) durch paralleles Eingeben einer Eingabe auf der Grundlage des dritten Bitstroms (35) in zwei oder mehr zweite S-Kästen (36).

2. Verfahren nach Anspruch **1,** wobei beim Berechnen des zweiten Bitstroms (33) der zweite Bitstrom (33) durch paralleles Eingeben der Eingabe auf der Grundlage des ersten Bitstroms (31) in zwei oder mehr erste S-Kästen (32) berechnet wird.

3. Verfahren nach Anspruch 1, das ferner ein Erzeugen eines zufälligen Initialisierungsvektors, IV, umfasst, wobei beim Berechnen des zweiten Bitstroms (33) ein Ergebnis der Berechnung des ersten Bitstroms (31) und des Zufalls-IVs in einen der ersten S-Kästen (32) eingegeben wird.

4. Verfahren nach Anspruch 1, das ferner ein Erzeugen eines zufälligen Initialisierungsvektors, IV, umfasst, wobei beim Berechnen des vierten Bitstroms (37) ein Ergebnis der Berechnung des dritten Bitstroms (35) und des Zufalls-IVs in einen der zweiten S-Kästen (36) eingegeben wird.

5. Verfahren nach Anspruch 1, das ferner ein Berechnen eines Ausgabebitstroms auf der Grundlage einer Berechnung des vierten Bitstroms (37) und des ersten Bitstroms (31) umfasst.

6. Verfahren nach Anspruch 1, das ferner ein Berechnen eines Ausgabebitstroms auf der Grundlage einer Berechnung für mindestens einen Teil der Bits, die den vierten Bitstrom (37) bilden, umfasst.

7. Verfahren nach Anspruch 1, wobei eine Länge des ersten Bitstroms (31) n ist,

die Anzahl des einen oder der mehreren ersten S-Kästen (32) $\ell_1$ ist und
die Verarbeitungsmatrix (34) eine $\ell_2 n$ x $\ell_1 n$-Matrix ist.

8. Verfahren nach Anspruch 1, wobei der dritte Bitstrom (35) ein Bitstrom ist, der eine Länge von $\ell_2 n$ aufweist, die Anzahl der zwei oder mehr zweiten S-Kästen (36) $\ell_2$ ist und beim Berechnen des vierten Bitstroms (37) eine Eingabe auf der Grundlage von $\ell_2 n$ Bitströmen, die vom dritten Bitstrom (35) abgeteilt sind, in jeden der zweiten S-Kästen (36) eingegeben wird.

9. Verfahren nach Anspruch 1, das ferner das Erzeugen der Verarbeitungsmatrix (34) umfasst, wobei das Erzeugen der Verarbeitungsmatrix (34) Folgendes umfasst:

Konfigurieren einer Zeile oder einer Spalte der Verarbeitungsmatrix (34) durch zufällige Stichprobenentnahme und
Konfigurieren verbleibender Zeilen oder verbleibender Spalten der Verarbeitungsmatrix (34) durch eine zirkulare Verschiebung für die eine Zeile oder die eine Spalte.

10. Verfahren nach Anspruch 1, das ferner Folgendes umfasst:

Erzeugen eines zufälligen Initialisierungsvektors, IV; und
Erzeugen der Verarbeitungsmatrix (34), wobei bei der Erzeugung der Verarbeitungsmatrix (34) die Verarbeitungsmatrix (34) durch Erzeugen einer linearen Schicht aus dem Zufalls-IV erzeugt wird.

11. Verfahren nach Anspruch 1, das ferner das Erzeugen der Verarbeitungsmatrix (34) umfasst, wobei in der Erzeugung der Verarbeitungsmatrix (34) alle Zeilen oder alle Spalten der Verarbeitungsmatrix (34) mit Zufallswerten konfiguriert sind.

12. Berechnungsverfahren nach Anspruch 1, das ferner ein Durchführen einer kenntnisfreien beweisbasierten digitalen Signatur unter Verwendung des Eingabebitstroms, der der erste Bitstrom ist, und des Ausgabebitstroms, der auf der Grundlage des vierten Bitstroms erhalten wird, umfasst.

13. Verfahren nach Anspruch 1, das ferner Folgendes umfasst:

Konfigurieren des Eingabebitstroms und des Ausgabebitstroms als einen geheimen Schlüssel bzw. einen öffentlichen Schlüssel der digitalen Signatur und
Erzeugen von Signaturdaten für die digitale Signatur durch Eingeben des geheimen Schlüssels und des öffentlichen Schlüssels in die Beweisfunktion für den kenntnisfreien Beweis.

14. Computerlesbares Speichermedium, das Befehle speichert, die, wenn sie durch einen Prozessor (101) ausgeführt werden, bewirken, dass eine Vorrichtung (100), die den Prozessor (101) enthält, Operationen zum Durchführen einer digitalen Signatur unter Verwendung einer einseitigen Funktion in einem kenntnisfreien Beweis durchführt, wobei die Operationen Folgendes umfassen:

Berechnen eines zweiten Bitstroms (33) aus einem oder mehreren ersten Substitutionskästen, S-Kästen, durch einen Eingabebitstrom der digitalen Signatur auf der Grundlage eines ersten Bitstroms (31) und
Berechnen eines dritten Bitstroms (35) durch Eingeben des zweiten Bitstroms (33) in eine Verarbeitungsmatrix (34); **gekennzeichnet durch**
Berechnen eines vierten Bitstroms (37) durch paralleles Eingeben einer Eingabe auf der Grundlage des dritten Bitstroms (35) in zwei oder mehr zweite S-Kästen (36).

15. Vorrichtung (100), die einen Prozessor (101) enthält, wobei der Prozessor (101) konfiguriert ist, eine digitale Signatur durchzuführen, was die folgenden Schritte umfasst:

Berechnen eines zweiten Bitstroms (33) aus einem oder mehreren ersten S-Kästen, Substitutionskästen, (32) durch einen Eingabebitstrom der digitalen Signatur auf der Grundlage eines ersten Bitstroms (31) und
Berechnen eines dritten Bitstroms (35) durch Eingeben des zweiten Bitstroms (33) in eine Verarbeitungsmatrix (34);
**gekennzeichnet durch**

Berechnen eines vierten Bitstroms (37) durch paralleles Eingeben einer Eingabe auf der Grundlage des dritten Bitstroms (35) in zwei oder mehr zweite S-Kästen (36).

16. Vorrichtung (100) nach Anspruch 15, wobei beim Berechnen des zweiten Bitstroms (33) der zweite Bitstrom (33) durch paralleles Eingeben der Eingabe auf der Grundlage des ersten Bitstroms (31) in zwei oder mehr erste S-Kästen (32) berechnet wird.


**Revendications**

1. Procédé d'exécution d'une signature numérique à l'aide d'une fonction à sens unique dans une preuve à connaissance nulle, le procédé étant exécuté par un processeur (101) dans un dispositif (100), le procédé comprenant les étapes suivantes :

   calculer un deuxième flux binaire (33) à partir d'une ou plusieurs premières boîtes de substitution, boîtes S, (32) par un flux binaire d'entrée de la signature numérique sur la base d'un premier flux binaire (31) ; et
   calculer un troisième flux binaire (35) en entrant le deuxième flux binaire (33) dans une matrice de traitement (34) ;
   **caractérisé par** :
   le calcul d'un quatrième flux binaire (37) par l'entrée parallèle d'une entrée basée sur le troisième flux binaire (35) dans deux, ou davantage, deuxièmes boîtes S (36).

2. Procédé selon la revendication 1, dans lequel, lors du calcul du deuxième flux binaire (33), le deuxième flux binaire (33) est calculé par l'entrée parallèle de l'entrée sur la base du premier flux binaire (31) à deux, ou davantage, premières boîtes S (32).

3. Procédé selon la revendication 1, comprenant en outre la génération d'un vecteur d'initialisation aléatoire, IV, dans lequel, lors du calcul du deuxième flux binaire (33), le résultat du calcul du premier flux binaire (31) et le vecteur d'initialisation aléatoire sont introduits dans l'une des premières boîtes S (32).

4. Procédé selon la revendication 1, comprenant en outre la génération d'un vecteur d'initialisation aléatoire, IV, dans lequel, lors du calcul du quatrième flux binaire (37), le résultat du calcul du troisième flux binaire (35) et le vecteur d'initialisation aléatoire sont introduits dans l'une des deuxièmes boîtes S (36).

5. Procédé selon la revendication 1, comprenant en outre le calcul d'un flux binaire de sortie, sur la base du calcul du quatrième flux binaire (37) et du premier flux binaire (31).

6. Procédé selon la revendication 1, comprenant en outre le calcul d'un flux binaire de sortie, sur la base du calcul pour au moins certains des bits constituant le quatrième flux binaire (37).

7. Procédé selon la revendication 1, dans lequel la longueur du premier flux binaire (31) est n,

   le nombre des une ou plusieurs premières boîtes S (32) est $\ell_1$, et
   la matrice de traitement (34) est une matrice $\ell_2 n$ x $\ell_1 n$.

8. Procédé selon la revendication 1, dans lequel le troisième flux binaire (35) est un flux binaire ayant une longueur $\ell_2 n$,

   le nombre des deux, ou davantage, deuxièmes boîtes S (36) est $\ell_2$, et
   lors du calcul du quatrième flux binaire (37), une entrée basée sur $\ell_2 n$ flux binaires divisés à partir du troisième flux binaires (35) est introduite dans chacune des deuxièmes boîtes S (36).

9. Procédé selon la revendication 1, comprenant en outre la génération de la matrice de traitement (34), où la génération de la matrice de traitement (34) comprend les étapes suivantes :

   configurer une ligne ou une colonne de la matrice de traitement (34) par échantillonnage aléatoire ; et
   configurer les lignes ou les colonnes restantes de la matrice de traitement (34) par décalage circulaire pour une ligne ou une colonne.

10. Procédé selon la revendication 1, comprenant en outre les étapes suivantes :

    générer un vecteur d'initialisation aléatoire, IV ; et
    générer la matrice de traitement (34),
    où lors de la génération de la matrice de traitement (34), la matrice de traitement (34) est générée en générant une couche linéaire à partir du vecteur d'initialisation aléatoire IV.

11. Procédé selon la revendication 1, comprenant en outre la génération de la matrice de traitement (34), où, lors de la génération de la matrice de traitement (34), toutes les lignes ou toutes les colonnes de la matrice de traitement (34) sont configurées avec des valeurs aléatoires.

12. Procédé de calcul selon la revendication 1, comprenant en outre l'exécution d'une signature numérique basée sur une preuve connaissance nulle en utilisant le flux binaire d'entrée, qui est le premier flux binaire, et le flux binaire de sortie obtenu sur la base du quatrième flux binaire.

13. Procédé selon la revendication 1, comprenant en outre les étapes suivantes :

> configurer le flux binaire d'entrée et le flux binaire de sortie en tant que clé secrète et clé publique de la signature numérique, respectivement ; et
> générer des données de signature pour la signature numérique en entrant la clé secrète et la clé publique dans la fonction de preuve pour la preuve à connaissance nulle.

14. Support de stockage lisible par ordinateur stockant des instructions qui, lorsqu'elles sont exécutées par un processeur (101), amènent un dispositif (100) comprenant le processeur (101) à exécuter des opérations pour réaliser une signature numérique à l'aide d'une fonction à sens unique dans une preuve à connaissance nulle, les opérations comprenant les étapes suivantes :

> calculer un deuxième flux binaire (33) à partir d'une ou plusieurs premières boîtes de substitution, boîtes S, par un flux binaire d'entrée de la signature numérique sur la base d'un premier flux binaire (31) ; et
> calculer un troisième flux binaire (35) en entrant le deuxième flux binaire (33) dans une matrice de traitement (34) ;
> **caractérisé par** :
> le calcul d'un quatrième flux binaire (37) par l'entrée parallèle d'une entrée basée sur le troisième flux binaire (35) dans deux, ou davantage, deuxièmes boîtes S (36).

15. Dispositif (100) comprenant un processeur (101), dans lequel le processeur (101) est configuré pour effectuer une signature numérique, ce qui comprend les étapes suivantes :

> calculer un deuxième flux binaire (33) à partir d'une ou plusieurs premières boîtes de substitution, boîtes S, (32) par un flux binaire d'entrée de la signature numérique sur la base d'un premier flux binaire (31) ; et
> calculer un troisième flux binaire (35) en entrant le deuxième flux binaire (33) dans une matrice de traitement (34) ;
> **caractérisé par** :
> le calcul d'un quatrième flux binaire (37) par l'entrée parallèle d'une entrée basée sur le troisième flux binaire (35) dans deux, ou davantage, deuxièmes boîtes S (36).

16. Dispositif (100) selon la revendication 15, dans lequel, lors du calcul du deuxième flux binaire (33), le deuxième flux binaire (33) est calculé par l'entrée parallèle de l'entrée sur la base du premier flux binaire (31) à deux, ou davantage, premières boîtes S (32).

[FIG. 1]

```
                    ┌─────────┐
                    │  START  │
                    └─────────┘
                         │
                         ▼
┌─────────────────────────────────────────┐
│     CALCULATE SECOND BIT STREAM FROM     │
│   ONE OR MORE FIRST S-BOXES BY INPUT     │─ S11
│        BASED ON FIRST BIT STREAM         │
└─────────────────────────────────────────┘
                         │
                         ▼
┌─────────────────────────────────────────┐
│       CALCULATE THIRD BIT STREAM BY      │
│     INPUTTING SECOND BIT STREAM TO       │─ S12
│            PROCESSING MATRIX             │
└─────────────────────────────────────────┘
                         │
                         ▼
┌─────────────────────────────────────────┐
│     CALCULATE FOURTH BIT STREAM FROM     │
│  ONE OR MORE SECOND S-BOXES BY INPUT     │─ S13
│        BASED ON THIRD BIT STREAM         │
└─────────────────────────────────────────┘
                         │
                         ▼
                       ( A )
```

[FIG. 2]

[FIG. 3]

[FIG. 4]

$31 \sim \mathbf{x} \in \{0, 1\}^n$

$33 \sim \mathbf{state_1} = S_1(x) \| \dots \| S_{\ell_1}(x) \in \{0, 1\}^{\ell_1 n}$

$35 \Big\{ \begin{array}{l} \mathbf{state_2} = \mathbf{Lin} \cdot \mathbf{state_1} \in \{0, 1\}^{\ell_2 n} \\ \\ \mathbf{state_2} = (u_1, \cdots, u_{\ell_2}) \in \{0, 1\}^{\ell_2 n}, \quad u_i \in \{0, 1\}^n \end{array}$

$37 \sim \mathbf{state_3} = (v_1, \cdots, v_{\ell_2}) \in \{0, 1\}^{\ell_2 n}, \quad v_i = S_i'(u_i) \in \{0, 1\}^n$

$39' \sim y = \bigoplus_{1 \le i \le \ell_2} v_i \in \{0, 1\}^n$

$39 \sim y = v_1 \oplus x$

[FIG. 5]

S11

CALCULATE SECOND BIT STREAM BY
PARALLELY INPUTTING INPUT BASED ON
FIRST BIT STREAM TO TWO OR
MORE FIRST S-BOXES

S111

[FIG. 6]

S13

CALCULATE FOURTH BIT STREAM BY
PARALLELY INPUTTING INPUT BASED ON
THIRD BIT STREAM TO TWO OR MORE
SECOND S-BOXES

S131

[FIG. 7]

```
                    ┌─────────┐
                    │  START  │
                    └────┬────┘
                         │
                         ▼
    ┌─────────────────────────────────────────┐
    │      GENERATE RANDOM INITIALIZATION      │ ～S10
    │              VECTOR (IV)                 │
    └─────────────────┬───────────────────────┘
                      │
                      ▼
    ┌─────────────────────────────────────────┐
    │   CALCULATE SECOND BIT STREAM FROM       │
    │ ONE OR MORE FIRST S-BOXES BY INPUT       │ ～S11
    │      BASED ON FIRST BIT STREAM           │
    └─────────────────┬───────────────────────┘
                      │
                      ▼
    ┌─────────────────────────────────────────┐
    │      CALCULATE THIRD BIT STREAM BY       │
    │   INPUTTING SECOND BIT STREAM TO         │ ～S12
    │         PROCESSING MATRIX                │
    └─────────────────┬───────────────────────┘
                      │
                      ▼
    ┌─────────────────────────────────────────┐
    │  CALCULATE FOURTH BIT STREAM FROM        │
    │  ONE OR MORE SECOND S-BOXES BY           │ ～S13
    │   INPUT BASED ON THIRD BIT STREAM        │
    └─────────────────┬───────────────────────┘
                      │
                      ▼
                    ┌───┐
                    │ A │
                    └───┘
```

[FIG. 8]

START

CALCULATE SECOND BIT STREAM FROM ONE OR MORE FIRST S-BOXES BY INPUT BASED ON FIRST BIT STREAM —— S11

CALCULATE THIRD BIT STREAM BY INPUTTING SECOND BIT STREAM TO PROCESSING MATRIX —— S12

CALCULATE FOURTH BIT STREAM FROM ONE OR MORE SECOND S-BOXES BY INPUT BASED ON THIRD BIT STREAM —— S13

CALCULATE OUTPUT BIT STREAM BASED ON CALCULATION OF FOURTH BIT STREAM AND FIRST BIT STREAM —— S14

A

[FIG. 9]

```
                    ┌─────────────┐
                    │    START    │
                    └─────────────┘
                           │
                           ▼
        ┌──────────────────────────────────────┐
        │  CALCULATE SECOND BIT STREAM FROM     │
        │  ONE OR MORE FIRST S-BOXES BY INPUT   │ ～ S11
        │  BASED ON FIRST BIT STREAM            │
        └──────────────────────────────────────┘
                           │
                           ▼
        ┌──────────────────────────────────────┐
        │  CALCULATE THIRD BIT STREAM BY        │
        │  INPUTTING SECOND BIT STREAM TO       │ ～ S12
        │  PROCESSING MATRIX                    │
        └──────────────────────────────────────┘
                           │
                           ▼
        ┌──────────────────────────────────────┐
        │  CALCULATE FOURTH BIT STREAM FROM     │
        │  ONE OR MORE SECOND S-BOXES BY INPUT  │ ～ S13
        │  BASED ON THIRD BIT STREAM            │
        └──────────────────────────────────────┘
                           │
                           ▼
        ┌──────────────────────────────────────┐
        │  CALCULATE OUTPUT BIT STREAM BASED    │
        │  ON CALCULATION ON AT LEAST SOME OF   │ ～ S14'
        │  BITS CONFIGURING FOURTH BIT STREAM   │
        └──────────────────────────────────────┘
                           │
                           ▼
                          ( A )
```

[FIG. 10]

S12

CONFIGURE ANY ONE ROW OR ANY ONE COLUMN OF PROCESSING MATRIX THROUGH RANDOM SAMPLING — S121

CONFIGURE REMAINING ROWS OR REMAINING COLUMNS OF PROCESSING MATRIX THROUGH CIRCULAR SHIFT FOR ONE ROW OR ONE COLUMN — S122

[FIG. 11]

S12

GENERATE RANDOM INITIALIZATION VECTOR (IV) — S121'

GENERATE PROCESSING MATRIX BY GENERATING LINEAR LAYER FROM RANDOM IV — S122'

[FIG. 12]

[FIG. 13]

$$81 \rightarrow \mathbf{L} = \{(\mathbf{y}, \mathbf{x})^{\cdot} : \mathbf{x} \leftarrow \{0,1\}^{\mathbf{n}}, \mathbf{y} = \mathbf{F}(\mathbf{x})\}$$

$$82 \rightarrow \mathbf{KeyGen}(1^{\lambda}) \rightarrow (pk, sk), \quad \mathbf{pk} = \mathbf{y} = \mathbf{F}(\mathbf{x}), \quad \mathbf{sk} = \mathbf{x}$$

$$83 \rightarrow \mathbf{Sign}(\mathbf{sk}, \mathbf{m}) \rightarrow \sigma, \quad \sigma = \pi \leftarrow \mathbf{ZK}.\mathbf{Prove}(pk, sk); m)$$

$$84 \rightarrow \mathbf{Verify}(\mathbf{pk}, \sigma) \rightarrow 0 \text{ or } 1, \quad 0 \text{ or } 1 \leftarrow \mathbf{ZK}.\mathbf{Verify}(\mathbf{pk}, \pi)$$

[FIG. 14]

<u>100</u>

107

101
PROCESSOR

102
NETWORK
INTERFACE

BUS

103
MEMORY

COMPUTER
PROGRAM

105

104
STORAGE

COMPUTER
PROGRAM

105

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ISHAI et al.** *STOC*, 2007
- **SEONGKWANG KIM et al.** AIM: Symmetric Primitive for Shorter Signatures with Stronger Security. *IACR, INTERNATIONAL ASSOCIATION FOR CRYPTOLOGIC RESEARCH*, 26 October 2022, vol. 20221026, 1-22
- **MELISSA CHASE et al.** Post-Quantum Zero-Knowledge and Signatures from Symmetric-Key Primitives. *IACR, INTERNATIONAL ASSOCIATION FOR CRYPTOLOGIC RESEARCH*, 27 March 2017, vol. 20170330, 1-25